# EUROPEAN PATENT APPLICATION

(11) **EP 4 075 569 A1**
(43) Date of publication of application: **19.10.2022**
(21) Application number: 20899157.0
(22) Date of filing: 11.12.2020
(51) Int. Cl.: H01M 10/48, H01M 50/20

(54) **BATTERY PACK**

(30) Priority: 11.12.2019 JP 2019223612
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KONDO, Atsumi, Kawasaki-shi, Kanagawa 212-0013 (JP); KURODA, Kazuto, Tokyo 105-0023 (JP); HAGIWARA, Keizo, Kawasaki-shi, Kanagawa 212-0013 (JP); YAMAMOTO, Masaaki, Kawasaki-shi, Kanagawa 212-0013 (JP)
(74) Representative: AWA Sweden AB
(86) International application number: PCT/JP2020/046231
(87) International publication number: WO 2021/117858

(57) **Abstract**

A battery pack according to an embodiment includes a case housing in which multiple battery cells are housed, and a monitoring substrate on which temperature sensors for measuring temperature of the battery cells are provided. The battery pack according to the embodiment further includes coupling materials provided in the case housing in a compressed state against the monitoring substrate to thermally connect the battery cells and the temperature sensors.

## Description

### FIELD

Embodiments of the present invention relate to a battery pack.

### BACKGROUND

Secondary batteries, such as lithium-ion batteries, are used as a battery pack in which multiple batteries are housed within a case. This battery pack successively monitors a current, a voltage, and a temperature of a lithium-ion battery. The battery pack monitors a state of the lithium-ion battery by monitoring the current, voltage, and temperature thereof. In addition, charge and discharge availability, state of charge (SOC), and the like are calculated on the basis of obtained information about the monitored current, voltage, and temperature, and then charge and discharge operations of the battery pack are performed. The degradation rate of such secondary batteries varies with a temperature history of battery cells, patterns of charge and discharge, and storage conditions, so that there is a need for structures or technologies that can detect, in particular, voltage and temperature with high accuracy.

In a case of a high-voltage application, a battery pack includes a main circuit with battery cells, which is a high-voltage circuit, and a low-voltage circuit including a thermistor that is a temperature sensor, a voltage sensor, and the like. In order for insulation between these high-voltage and low-voltage circuits, measures of securing the creepage and clearance distances are required.

If a distance between the high-voltage circuit and the low-voltage circuit is physically increased, a distance between the temperature sensor, which is a part of the low-voltage circuit, and a surface of a battery cell is increased. Then, a temperature on a battery surface and a temperature measured by the temperature sensor are diverged from each other, thereby causing detection on the temperature on the surface of the battery cell with high accuracy to be difficult.

It is also considered that the temperature sensor is closely fixed to a surface of the battery cell itself through an insulator. However, this measure causes the detrimental effect of preventing disassembly of the battery pack when the battery cell is recycled or reused.

Moreover, there is a known technique that the secondary battery is thermally connected to the temperature sensor by filling, with a thermal coupling material, a gap between a secondary battery and a temperature sensor fixed to a circuit board (Patent Literature 1).

### CITATION LIST

### Patent Literature

Patent Literature 1: Japanese Patent Application Laid-open No. 2005-317454

### SUMMARY OF THE INVENTION

### Problem to be Solved by the Invention

However, only by filling the gap between the secondary battery and the temperature sensor with the thermal coupling material, thermal conductivity of the thermal coupling material is small, and it takes time for transferring a temperature of the secondary battery to the temperature sensor after the secondary battery generates heat. Thus, there are problems that a time delay occurs on the temperature measurement of the battery surface, and that the measurement accuracy is lowered.

An object of the present invention is to provide a battery pack with a highly accurate temperature detection function that can be applied to battery cells for highpressure applications.

Means for Solving Problem

In order to solve the problems above, a battery pack according to an embodiment includes: a case housing in which multiple battery cells are housed; a monitoring substrate on which temperature sensors for measuring temperature of the battery cells are provided; and coupling materials provided in the case housing in a compressed state against the monitoring substrate to thermally connect the battery cells and the temperature sensors.

### BRIEF DESCRIPTION OF DRAWINGS

FIG. 1 is an exploded perspective view schematically illustrating an internal configuration of the entirety of a battery pack according to a first embodiment.
FIG. 2 is a cross-sectional view schematically illustrating the internal configuration of the entirety of the battery pack according to the first embodiment.
FIG. 3 is an enlarged cross-sectional view illustrating the internal configuration of the battery pack according to the first embodiment.
FIG. 4A is a diagram illustrating a state of a coupling material of the battery pack according to the first embodiment.
FIG. 4B is a diagram illustrating a state of the coupling material of the battery pack according to the first embodiment.
FIG. 5A is a diagram illustrating a temperature around a battery cell of the battery pack according to the first embodiment.
FIG. 5B is a diagram illustrating a temperature change over time around the battery cell of the battery pack according to the first embodiment.
FIG. 6 is a cross-sectional view illustrating an internal configuration of a battery pack according to a second embodiment.
FIG. 7A is a diagram illustrating a modified example of the battery pack according to the second embodiment.
FIG. 7B is a diagram illustrating the modified example of the battery pack according to the second embodiment.
FIG. 8 is a diagram illustrating another modified example of the battery pack according to the second embodiment.
FIG. 9A is a diagram illustrating an internal configuration of a battery pack according to a third embodiment.
FIG. 9B is a diagram illustrating the internal configuration of the battery pack according to the third embodiment.
FIG. 10 is a diagram illustrating an internal configuration of a battery pack according to a fourth embodiment.
FIG. 11A is a diagram illustrating an internal configuration of a battery pack according to a fifth embodiment.
FIG. 11B is a diagram illustrating the internal configuration of the battery pack according to the fifth embodiment.
FIG. 12A is a diagram illustrating an internal configuration of a battery pack according to a sixth embodiment.
FIG. 12B is a diagram illustrating the internal configuration of the battery pack according to the sixth embodiment.

### DETAILED DESCRIPTION

The description of embodiments for implementing the invention will be described below.

### (First Embodiment)

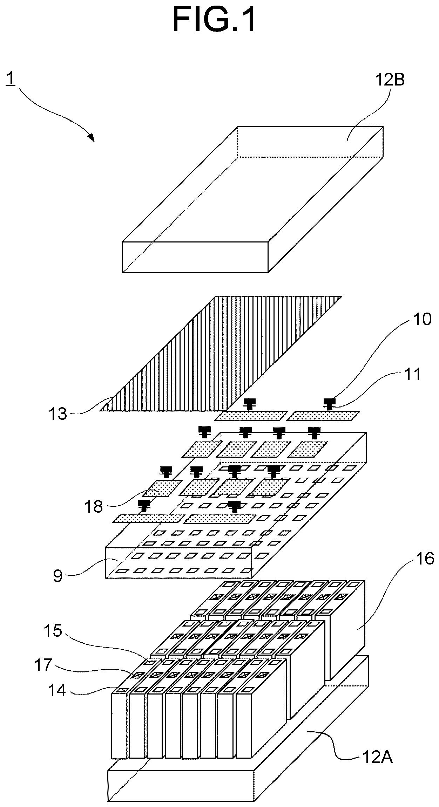

A battery pack 1 according to a first embodiment will be described with reference to FIG. 1 to FIG. 5B.

FIG. 1 is an exploded perspective view schematically illustrating an internal configuration of the battery pack 1 according to the first embodiment.

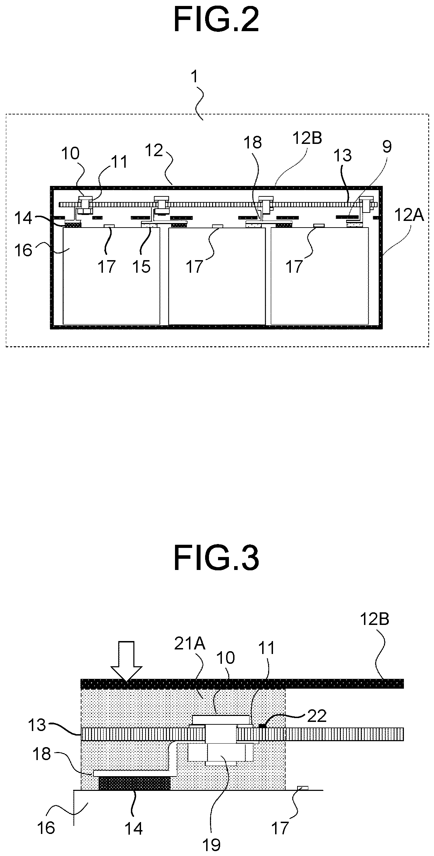

FIG. 2 is a cross-sectional view schematically illustrating the internal configuration of the battery pack 1 according to the first embodiment.

FIG. 3 is an enlarged cross-sectional view illustrating the internal configuration of the battery pack 1 according to the first embodiment.

As illustrated in FIGS. 1, 2, and 3, the battery pack 1 includes a case housing 12, battery cells 16 each of which is provided with a positive terminal 14 and a negative terminal 15, release valves 17 provided on the battery cells 16, bus bars 18, a monitoring substrate 13, bolts 10, washers 11, nuts 19, a separator 9, temperature sensors 22, and coupling materials 21A.

The case housing 12 includes a case body 12A and a lid body 12B. The case body 12A houses the battery cells 16. A battery pack, such as for railroad use, in-vehicle use, or industrial applications, includes two or more battery cells 16 housed in the case housing 12, as illustrated in FIG. 1, for example.

Each of the battery cells 16 is provided with the positive terminal 14 and the negative terminal 15. The battery cells 16 are bonded and fixed to the case housing 12 through a material having a closely fixing and adhering function, such as an adhesive, a compound, a gap filler, or the like.

Each of the battery cells 16 is also provided with the release valve 17. The release valve 17 has a function of releasing an atomized electrolyte in a case where electrolyte boils inside the battery cell 16 by overcharging or other reasons and then the internal pressure increases due to the atomized electrolyte.

Each of the bus bar 18 functions to electrically connect the positive terminal 14 and the negative terminal 15 of the corresponding battery cell 16. The bus bar 18 is joined to the positive terminal 14 and the negative terminal 15 by means such as welding. The desired number of series and parallel configurations are arranged in the battery pack 1 on the basis of a shape of the bus bar 18 and a combination of connections of the positive terminal 14 and the negative terminal 15.

The monitoring substrate 13 has a function to electronically conduct electronic components such as voltage sensors for detecting voltage of the battery cells 16 and the temperature sensors 22 for detecting temperature. A circuit pattern is formed on a surface of the monitoring substrate 13 by using copper foil. Also a main circuit wiring of the battery cells 16 may be connected through the surface of the monitoring substrate 13. The monitoring substrate 13 is also referred to as a cell monitoring unit (CMU). The monitoring substrate 13 is fixed to the bus bars 18 by the bolts 10, the washers 11, and the nuts 19.

The battery packs 1 may be connected in series and parallel, and be housed in another device. In such a case, high voltage, for example, 750 V or 1500 V, may be sometimes applied to the main circuit side, that is, applied to the positive terminal 14 and the negative terminal 15 of the battery cell 16. Therefore, an internal structure of the battery pack 1 is configured to secure an insulation distance or a creepage distance between the high voltage side to which a high voltage of the battery cell 16 is applied and a low voltage circuit section of the monitoring substrate 13, in which the positive terminal 14, the negative terminal 15, and the bus bar 18, and the like are disposed on the high voltage side. The low-voltage circuit is physically separated from a high-voltage circuit by providing the separator 9 or the like made of a material having a high comparative tracking index (CTI).

The temperature sensor 22 is means for measuring a temperature of the battery cell 16. The temperature sensor 22 is provided on the monitoring substrate 13. The temperature sensor 22 may be, for example, a thermistor or a known temperature sensor such as a thermocouple.

Each of the coupling materials 21A is provided in the case body 12A in a compressed state against the monitoring substrate 13, and functions to thermally connect the battery cell 16 and the temperature sensor 22.

As illustrated in FIG. 3, the coupling material 21A is fitted, in a compressed state, between the battery cell 16 and the monitoring substrate 13 and between the monitoring substrate 13 and the lid body 12B so as to be closely fixed to the battery cell 16 and the temperature sensor 22.

For example, as illustrated in FIG. 3, the coupling material 21A may be fixed between the battery cell 16 and the lid body 12B in a state of being compressed by the lid body 12B with the monitoring substrate 13 interposed between the battery cell 16 and the lid body 12B. In a case where the coupling material blocks the release valve 17 of the battery cell 16, an atomized electrolyte cannot be released when the internal pressure of the battery cell 16 increases. Therefore, the coupling material 21A is provided at a position to avoid a position of the release valve 17.

The arrow illustrated in FIG. 3 indicates a direction of a compressive force applied to the coupling material 21A.

In this case, the coupling material 21A is compressed against the temperature sensor 22 in a direction reducing distance between the temperature sensor 22 and the battery cell 16.

The coupling material 21A is formed to have a thickness enough to eliminate a gap between the lid body 12B and the monitoring substrate 13.

Thereby, the lid body 12B and the monitoring substrate 13 can be compressed and closely fixed to each other while interposing the monitoring substrate 13 that includes the temperature sensor 22, and the gap between the lid body 12B and the monitoring substrate 13 can be filled.

The coupling material 21A may be a flexible resin that is deformed by compression and has a known thermal conductivity. Additionally, the coupling material 21A may be a flexible resin material.

It is preferable for the coupling material 21A to apply an insulating material such as silicone with a high thermal conductivity (for example, 1 [W/m·K] or higher).

As the coupling material 21A, for example, a resin with a high CTI value, an Asker C intended for hardness of about several tens, a dielectric breakdown voltage of 5 [kV/mm] or higher, and the fire retardant resin class of UL 94 flammability standard of V-0 or higher is desirable.

In addition, the coupling material 21A is retained and fixed while the compressive force is applied in the present embodiment, so that the coupling material 21 is desirably realized with silicone or the like, which is a material with low creep.

As described above, the coupling material 21A is provided, which is deformed by compression to thermally connect the battery cell 16 and the temperature sensor 22 in a compressed state against the monitoring substrate 13. Therefore, a temperature acquired by the temperature sensor 22 approaches a temperature of the battery cell 16, so that accurate temperature detection can be achieved. Additionally, the time constant, which is a time from when a temperature of the battery cell 16 changes until the temperature is detected by the temperature sensor 22, is reduced. Therefore, the temperature can be detected with high accuracy in accordance with a change in a temperature on a surface of the battery cell 16.

Next, states of the coupling material 21A will be described.

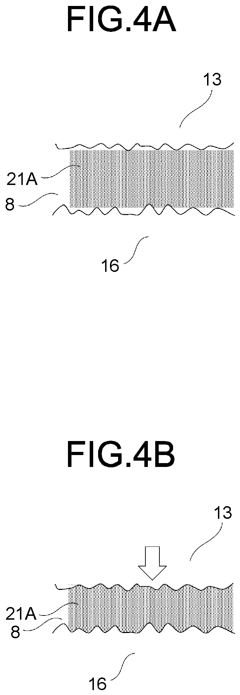

FIG. 4A and FIG. 4B are diagrams illustrating states of the coupling material 21A of the battery pack 1 according to the first embodiment.

The arrow illustrated in FIG. 4B indicates a direction of the compressive force applied to the coupling material 21A.

FIG. 4A is a diagram illustrating the coupling material 21A in a state where no compressive force is applied. FIG. 4B is a diagram illustrating the coupling material 21A in a state where a compressive force is applied in the direction indicated by the arrow.

In the present embodiment, the coupling material 21A is compressed to the extent that the coupling material 21A is deformed by approximately 30 percent. Alternatively, the coupling material 21A is compressed to the extent that the coupling material 21A is compressed with enough force to secure a tightening torque of 167 [N·cm] by a screw or other means for compression.

When the coupling material 21A is compressed, a thermal conductivity thereof in the compression direction increases. Additionally, when the coupling material 21A is compressed, the thermal conductivity thereof generally increases in the direction of compression. Heat is conducted faster and lager where the thermal conductivity is greater. Hence, when the coupling material 21A is compressed and closely fixed between the surface of the battery cell 16 and the monitoring substrate 13, heat is conducted to the surface of the battery cell 16 where the thermal conductivity is great and also conducted to the monitoring substrate 13 whose thermal conductivity is greater than an air 8.

The thermal conductivity is, for example, approximately 0.1 to 0.3 [W/m·K] for the monitoring substrate 13, approximately 137 [W/m K] for the surface of the battery cell 16 (made of aluminum), approximately 0.0257 [W/m·K] for the air 8, and approximately 1 to 5 [W/m K] for the coupling material 21A.

In the present embodiment, the following principle is used. Heat present in the battery cells 16 and the monitoring substrate 13 is conducted to surroundings thereof, whereas the heat is less likely to be conducted to the air 8 having a low thermal conductivity. Thus, heat is more easily conducted to the coupling material 21A, and a heat flux [W/m2] increases in a direction that the coupling material 21A is compressed. Heat is easily transmitted to the side where the thermal conductivity is large, so that most of the heat emitted from the battery cells 16 is transmitted to the back side of the monitoring substrate 13 through the coupling material 21A. Therefore, a temperature acquired by the temperature sensor 22 on the back side of the monitoring substrate 13 approaches a temperature on the surface of the battery cell 16.

Moreover, as described in FIGS. 4A and 4B, there is fine unevenness on the surface of the battery cell 16 and on the surface of the monitoring substrate 13. When the coupling material 21A is interposed between the battery cell 16 and the monitoring substrate 13 and is pressurized in the direction of the arrow, the fine unevenness on the surface of the battery cell 16 and on the surface of the monitoring substrate 13 is filled with the coupling material 21A because the coupling material 21A is a stretchable material. As a result, air present between the surface of the battery cell 16 and the coupling material 21A and between the monitoring substrate 13 and the coupling material 21A is reduced, the contact thermal resistance is lowered, and the thermal conduction performance is improved.

Next, a temperature distribution around the battery cells 16 will be described.

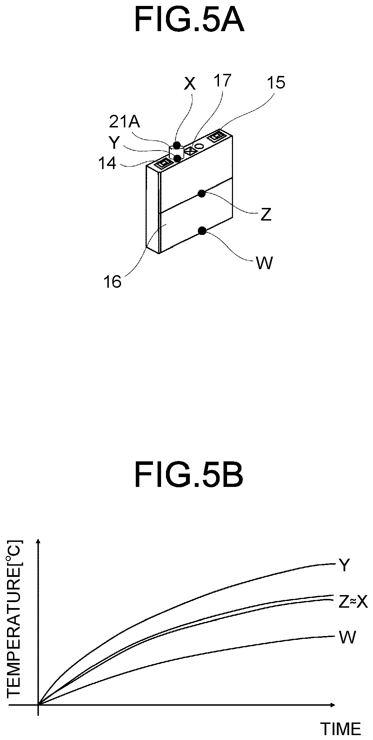

FIG. 5A is a diagram illustrating a temperature around the battery cell 16 of the battery pack 1 according to the first embodiment. FIG. 5B is a diagram illustrating a temperature change over time around the battery cell 16 of the battery pack 1 according to the first embodiment.

As illustrated in FIG. 5A, an upper portion X of the coupling material 21A, a lower portion Y of the coupling material 21A (that is, an upper surface of the battery cell 16), a side center portion Z of the battery cell 16, and a surface lower portion W of the battery cell 16 are set as temperature measurement points on the battery cell 16.

For example, temperature changes in X, Y, Z, and W over time are obtained as illustrated in FIG. 5B. In a case of desiring to acquire a temperature of the side center portion Z of the battery cell 16, a highly accurate measurement value can be obtained by acquiring a temperature of the upper portion X of the coupling material 21A.

By the present embodiment, a temperature acquired by the temperature sensor 22 on the monitoring substrate 13 can be close to temperatures on the bus bar 18 and the battery cell 16.

It is also possible to detect a temperature approaching the temperature on the surface of each battery cell 16 by the temperature sensor 22 with high accuracy in accordance with changes in the temperature on the surface of each battery cell 16.

By the present embodiment, it is also possible to prevent damage to the monitoring substrate 13, and the like inside the battery pack 1 by compression deformation of the coupling material 21A, even in a case where external vibration is applied to the battery pack 1.

In addition, according to the first embodiment, it is possible to provide the battery pack in which the coupling material 21A can be easily removed in a case of recycling and reusing each battery cell 16 and which can be easily disassembled.

Moreover, according to the first embodiment, it is possible to provide the battery pack with a temperature detection function that can be applied to battery cells for high-voltage applications.

In the present embodiment, the temperature sensor 22 that detects a temperature and the coupling material 21A may be disposed at a position to avoid the release valve 17 included in each battery cell 16, that is, a position to avoid the direction in which the atomized electrolyte is released.

In FIG. 3, the coupling material 21A is disposed so that the gaps on both sides of the monitoring substrate 13 are filled. However, another configuration may be adopted such that the bus bar 18 portion is left with a gap to prevent heat generated from the bus bar 18 from being transmitted to the temperature sensor 22, and the coupling material 21A is fixed so as to fill only the gaps near the bolt 10, the washer 11, the lid body 12B, the temperature sensor 22, and the nut 19.

### (Second Embodiment)

In a second embodiment, coupling materials 21B are each compressed by the monitoring substrate 13.

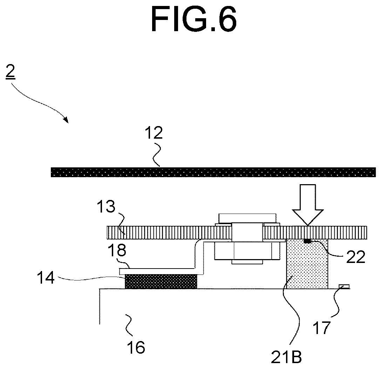

A battery pack 2 according to the second embodiment will be described with reference to FIGS. 6 to 8.

The same reference numerals are given to components of the battery pack 2, which have the same functions as those of the battery pack 1 according to the first embodiment, and the descriptions thereof will not be repeated.

FIG. 6 is a cross-sectional view illustrating an internal configuration of the battery pack 2 according to the second embodiment. The arrow illustrated in FIG. 6 indicates a direction of a compressive force applied to the coupling material 21B.

The difference between the battery pack 1 according to the first embodiment and the battery pack 2 according to the second embodiment is a position where the temperature sensor 22 is disposed.

In the battery pack 2 according to the second embodiment, the temperature sensor 22 is disposed on a surface of the monitoring substrate 13, which faces the battery cell 16. Circuit patterns can be generally etched and disposed on both sides of a substrate. Thus, it is also possible to dispose the temperature sensor 22 on the battery cell 16 side of the monitoring substrate 13.

The present embodiment has the feature that the temperature sensor 22 and a surface of the battery cell 16 are disposed at positions facing each other.

The temperature sensor 22 is disposed on a position where the temperature sensor 22 is not directly hit by an atomized electrolyte in a case that the atomized electrolyte is released from the release valve 17 of the battery cell 16.

The coupling material 21B is fixed between the battery cell 16 and the monitoring substrate 13 in a state where the coupling material 21B is compressed by the monitoring substrate 13 while interposing the temperature sensor 22 between the battery cell 16 and the monitoring substrate 13.

The coupling material 21B may be a flexible resin, such as silicone used for the coupling material 21A, which deforms by compression with obvious thermal conductivity. The coupling material 21B may be an insulating resin. Examples of the insulating resin and the flexible resin that deforms by compression include a resin with a high CTI value, a thermal conductivity of 1 [W/m·K] or higher, an Asker C intended for hardness of about several tens, a dielectric breakdown voltage of 5 [kV/mm] or higher, and the fire retardant resin class of UL 94 flammability standard of V-0 or higher.

A gap between the surface of the battery cell 16 and the monitoring substrate 13 is filled with the compressed coupling material 21B, and thereby a solid heat transmitting path is formed between the temperature sensor 22 and the surface of the battery cell 16.

According to this structure of the present embodiment, due to interposition of the coupling material 21B only in the vicinity of the temperature sensor 22, the material cost of the coupling material 21B can be reduced, and allows for a simplified structure.

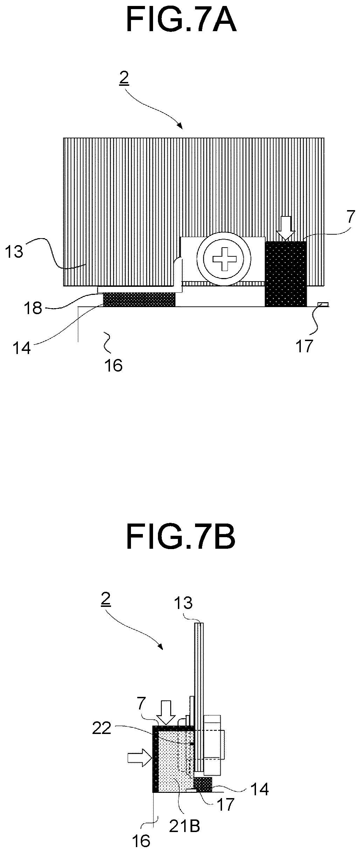

FIGS. 7A and 7B are diagrams illustrating a modified example of the battery pack 2 according to the second embodiment. The arrows illustrated in FIGS. 7A and 7B indicate a direction of a compressive force applied to the coupling material 21B.

FIG. 7A is a front view illustrating a modified example of the battery pack 2 according to the second embodiment. FIG. 7B is a side view illustrating the modified example of the battery pack 2 according to the second embodiment.

As illustrated in FIGS. 7A and 7B, the monitoring substrate 13 may be positioned to stand upright with respect to the positive terminal 14 side of the battery cell 16. In this case, the monitoring substrate 13 may include a pressure plate 7 that presses and compresses the coupling material 21B. In FIGS. 7A and 7B, the monitoring substrate 13 is fixed to the bus bar 18 with the bolt 10 and the nut 19 in a state where the coupling material 21B is pressed and compressed toward the battery cell 16 side by the pressure plate 7 provided on the monitoring substrate 13. Alternatively, a structure in which the coupling material 21B is pressed and compressed by another member (case body 12A, lid body 12B, or the like) may be adopted.

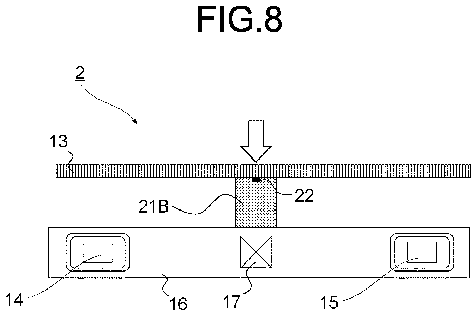

FIG. 8 is a diagram illustrating another modified example of the battery pack 2 according to the second embodiment. The arrow illustrated in FIG. 8 indicates a direction of a compressive force applied to the coupling material 21B.

As illustrated in FIG. 8, the monitoring substrate 13 may be positioned in parallel with a side surface of the battery cell 16.

### (Third Embodiment)

In a third embodiment, coupling materials 21C are each provided with a protrusion portion 31 that suppresses movement with respect to the monitoring substrate 13.

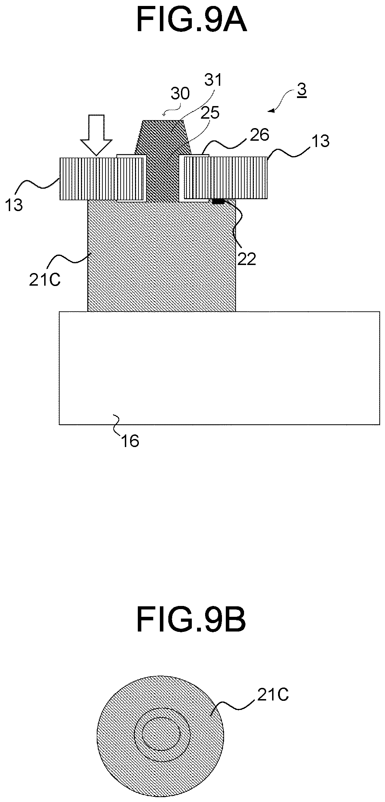

A battery pack 3 according to the third embodiment will be described with reference to FIGS. 9A and 9B.

The same reference numerals are given to components of the battery pack 3, which have the same functions as those of the battery packs according to the first embodiment and the second embodiment, and the descriptions thereof will not be repeated.

FIGS. 9A and 9B are diagrams illustrating an internal configuration of the battery pack 3 according to the third embodiment. The arrow illustrated in FIG. 9A indicates a direction of the compressive force applied to the coupling material 21C.

As illustrated in FIG. 9A, the monitoring substrate 13 is provided with a through-hole 25. The coupling material 21C illustrated in FIGS. 9A and 9B is made of ultraviolet-curable resin.

The coupling material 21C is irradiated with ultraviolet light in a state of passing through the through-hole 25 and is cured to form a protrusion portion 31 that suppresses movement with respect to the through-hole 25.

The through-hole 25 may be surrounded by a metal foil (land) 26 that functions as circuit wiring between the front and back of the monitoring substrate 13. In the case where the temperature sensor 22 is disposed on the monitoring substrate 13 side to face the battery cell 16, the metal foil (land) 26 is used to connect the temperature sensor 22 to a circuit on the opposite side to the monitoring substrate 13 side on which the temperature sensor 22 is disposed to face the battery cell 16.

The coupling material 21C functions as a heat transmitting member that thermally connects the monitoring substrate 13 and a surface of the battery cell 16.

The coupling material 21C is formed of a resin material that has the feature in which the resin material is cured with hardness improved upon ultraviolet ray irradiation.

The coupling material 21C includes a cylindrical or rectangular compression-deformable portion and the protrusion portion 31 tapered to be engaged with the monitoring substrate 13 in a state of passing through the through-hole 25.

The tapered protrusion portion 31 has the feature that the protrusion portion 31 is held in a state of passing from the monitoring substrate 13 side of facing the battery cell 16 and is caught. The coupling material 21C is irradiated with an ultraviolet ray emitted from a vertex portion 30 of the protrusion portion 31 and cured in a state where the coupling material 21C is held between the monitoring substrate 13 and the surface of the battery cell 16.

With this structure, the through-hole 25 and the coupling material 21C are further firmly fixed to each other and held together.

According to the present embodiment, the temperature sensor 22 has the solid heat transmitting path between the temperature sensor 22 and the surface of the battery cell 16, so that a temperature acquired by the temperature sensor 22 approaches the temperature on the surface of the battery cell 16, and thereby temperature detection with high accuracy is realized.

In addition, according to the present embodiment, the through-hole 25 of the monitoring substrate 13 and the coupling material 21C are firmly fixed to each other and held. Therefore, it is possible to prevent the coupling material 21C from moving inside the battery pack 3.

In order to maintain the coupling material 21C in a compression state, the monitoring substrate 13 may be fixed to the bus bar 18 using a bolt and a nut (not illustrated).

### (Fourth Embodiment)

In a fourth embodiment, coupling materials 21D are each fixed to the monitoring substrate 13 by a fixture 23.

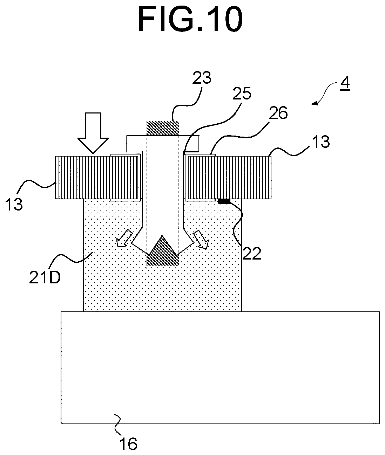

A battery pack 4 according to the fourth embodiment will be described with reference to FIG. 10.

The same reference numerals are given to components of the battery pack 4, which have the same functions as those of the battery packs according to the first embodiment to the third embodiment, and the descriptions thereof will not be repeated.

FIG. 10 is a diagram illustrating an internal configuration of the battery pack 4 according to the fourth embodiment. The arrow illustrated in FIG. 10 indicates a direction of a compressive force applied to the coupling material 21D.

As illustrated in FIG. 10, the monitoring substrate 13 is provided with the through-hole 25, and the coupling material 21D includes a fixture 23 that suppresses movement with respect to the through-hole 25 by being fixed to the through-hole 25 in a state of being inserted into the through-hole 25.

In the same manner as in the third embodiment, the metal foil (land) 26 may be provided around the through-hole 25.

As illustrated in FIG. 10, the fixation of the monitoring substrate 13 to the coupling material 21D that thermally connects the monitoring substrate 13 and the surface of the battery cell 16 is achieved by using the fixture 23.

The coupling material 21D has a hole formed in advance so that the fixture 23 can be inserted, and the fixture 23 is inserted into the hole while entering the hole.

The deformable and compressible coupling material 21D is first sandwiched between the monitoring substrate 13 and the battery cell 16, and the temperature sensor 22 is disposed on the monitoring substrate 13 to face the battery cell 16 side.

In a case where a force is applied from the opposite side to the monitoring substrate 13 side on which the temperature sensor 22 is disposed to face the battery cell 16 side, by the fixture 23 being inserted into the through-hole 25, the front end of the fixture 23 opens and enters to stick the coupling material 21D to be fixed and held.

The coupling material 21D may be a resin material with high thermal conductivity and insulating properties. Examples thereof include silicone, but the present embodiment is not particularly limited to silicone.

According to the present embodiment, the coupling material 21D can be closely fixed between the monitoring substrate 13 and the battery cell 16 to form the solid heat transmitting path between the temperature sensor 22 and the battery cell 16. As a result, a temperature on the surface of the battery cell 16 and a temperature on the monitoring substrate 13 detected by the temperature sensor 22 can approach each other.

In addition, according to the present embodiment, the through-hole 25 of the monitoring substrate 13 and the coupling material 21D are firmly fixed to each other and held, so that it is possible to prevent the coupling material 21D from moving inside the battery pack 4.

In order to maintain the coupling material 21D in a compression state, the monitoring substrate 13 may be fixed to the bus bar 18 using a bolt and a nut (not illustrated).

### (Fifth Embodiment)

In a fifth embodiment, coupling material 21E each have a suction cup shape of clinging onto the monitoring substrate 13.

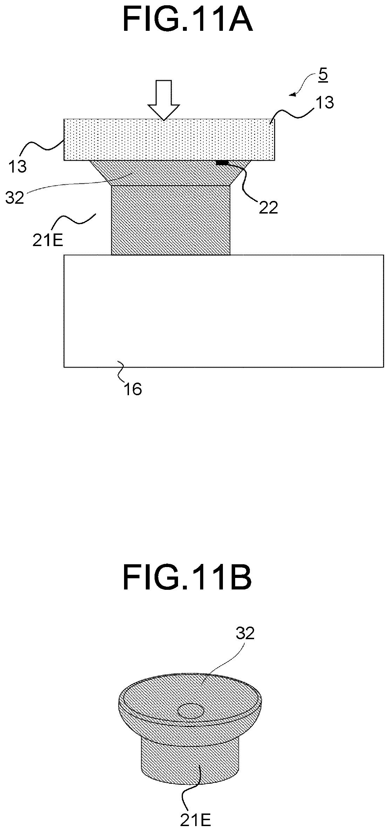

The coupling material 21E according to the fifth embodiment will be described with reference to FIGS. 11A and 11B.

The same reference numerals are given to components of the battery pack 5, which have the same functions as those of the battery packs according to the first embodiment to the fourth embodiment, and the descriptions thereof will not be repeated.

FIGS. 11A and 11B are diagrams illustrating an internal configuration of the battery pack 5 according to the fifth embodiment. The arrow illustrated in FIG. 11A indicates a direction of the compressive force applied to the coupling material 21E.

As illustrated in FIGS. 11A and 11B, the coupling material 21E includes a suction cup portion 32 that is shaped like a suction cup deformable by being pressed against a flat object. The suction cup portion 32 is shaped like a circular dish, as illustrated in FIG. 11B. The suction cup portion 32 has a structure in which upon suction, air between the flat object to be sucked and the inside of the circular dish is degassed, thereby the suction cup portion 32 closely adhering.

The coupling material 21E functions as a heat transmitting member that thermally connects the monitoring substrate 13 and a surface of the battery cell 16.

The coupling material 21E is desirably formed of an elastic material with high thermal conductivity, and also with insulating and flexible properties. Examples thereof include silicone, a fluoro rubber, and the like.

As illustrated in FIG. 11A, the suction cup portion 32 is provided on the monitoring substrate 13 side in the present embodiment, but may be provided on both the battery cell 16 side and the monitoring substrate 13 side.

It is preferable that the coupling material 21E is formed in advance to become slightly larger than a distance between the battery cell 16 and the monitoring substrate 13 so that the coupling material 21E can be closely fixed to the battery cell 16 and the monitoring substrate 13 when pressed between them.

According to the present embodiment, the coupling material 21E can be closely fixed between the monitoring substrate 13 and the battery cell 16 to form the solid heat transmitting path between the temperature sensor 22 and the battery cell 16, thereby achieving that a temperature on the surface of the battery cell 16 and a temperature on the monitoring substrate 13 detected by the temperature sensor 22 approach each other.

In addition, according to the present embodiment, since the coupling material 21E can be formed of flexible rubber, or the like, manufacturing costs can be further reduced than a case of being formed of a resin, or the like.

In order to maintain the coupling material 21E in a compression state, the monitoring substrate 13 may be fixed to the bus bar 18 using a bolt and a nut (not illustrated).

### (Sixth Embodiment)

In a sixth embodiment, coupling materials 21F each a bellows shape extending between the monitoring substrate 13 and the battery cell 16.

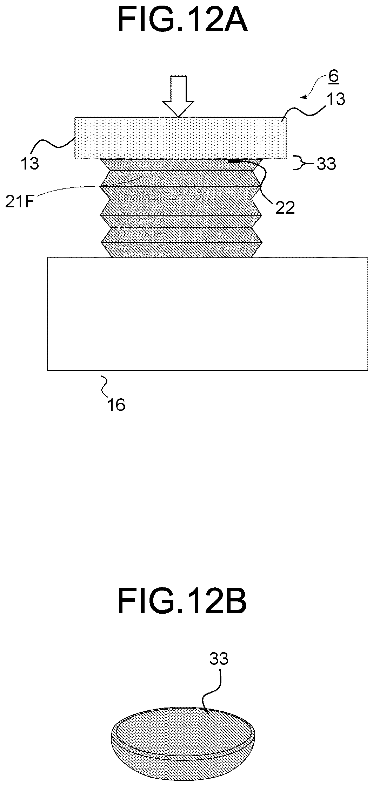

A battery pack 6 according to the sixth embodiment will be described with reference to FIGS. 12A and 12B.

The same reference numerals are given to components of the battery pack 6, which have the same functions as those of the battery packs according to the first embodiment to the fifth embodiment, and the descriptions thereof will not be repeated.

FIGS. 12A and 12B are diagrams illustrating an internal configuration of the battery pack 6 according to the sixth embodiment. The arrow illustrated in FIG. 12A indicates a direction of the compressive force applied to the coupling material 21F.

The coupling material 21F serves as a heat transmitting member that thermally connects a surface of the battery cell 16 and the monitoring substrate 13.

The coupling material 21F should be made of an elastic material with high thermal conductivity, insulation and flexibility. Examples thereof include silicone, a fluoro rubber, and the like.

The coupling material 21F has a bellows shape. The bellows shape of the coupling material 21F is a spring-like structure that can expand and contract freely. In the present embodiment, the number of bellows 33 is not limited, but is one or more to the extent that the bellows 33 can be molded. The coupling material 21F is filled with a resin or the like and is not hollow.

The coupling material 21F is formed slightly longer in advance than a distance between the battery cell 16 and the monitoring substrate 13, is sandwiched between the battery cell 16 and the monitoring substrate 13, and is compressed and crushed from both sides, to achieve the coupling material 21F closely fixed between the battery cell 16 and the monitoring substrate 13. Thereby, the solid heat transmitting path between the battery cell 16 and the temperature sensor 22 is formed.

According to the present embodiment, it is achieved that the coupling material 21E is closely fixed between the monitoring substrate 13 and the battery cell 16 to form the solid heat transmitting path between the battery cell 16 and the temperature sensor 22, thereby achieving that a temperature on the surface of the battery cell 16 and a temperature on the monitoring substrate 13 detected by the temperature sensor 22 approach each other.

In order to maintain the coupling material 21F in a compression state, the monitoring substrate 13 may be fixed to the bus bar 18 using a bolt and a nut (not illustrated).

In addition, according to the present embodiment, since the coupling material 21E can be formed of flexible rubber, or the like, manufacturing costs can be further reduced than a case of being formed of a resin, or the like.

According to the present embodiment, it is possible to provide the battery pack that has high vibration resistance and durability and that can be applied to railroad use, in-vehicle use, or industrial applications.

As described above, according to the first embodiment to the sixth embodiment, it is possible to provide the battery pack with a highly accurate temperature detection function that can be applied to battery cells for high voltage applications.

According to the first embodiment to the sixth embodiment, it is possible to provide the battery pack that has high vibration resistance and durability and that can be applied to railroad use, in-vehicle use, or industrial applications.

In addition, according to the first embodiment to the sixth embodiment, it is possible to provide the battery pack in which the coupling material can be easily removed in a case of recycling and reusing the battery cell, and which can be easily disassembled.

In the present embodiment, the battery pack is described with the prismatic battery cell as an example, but similar implementation is possible as long as the battery cell is a cylindrical-shaped battery cell or a flat-shaped battery cell, which has a relatively rigid structure.

In the present embodiment, the battery packs 1 to 6 are described as examples of a constituent unit of a battery pack, but the present invention can also be applied to larger packs or devices connected in series and parallel.

In the present embodiments, since the structure that provides insulation and thermal conductivity while the gap between the temperature sensor 22 and the battery cell 16 is filled is proposed, a method of connecting the bus bar 18 to the positive terminal 14 and the negative terminal 15 is not particularly limited.

In addition, in the present embodiment, the bus bar 18 is joined to the positive terminal 14 and the negative terminal 15 by welding, but a joining method is not limited to the welding.

Although various embodiments of the present invention have been described, these embodiments are presented as examples and are not intended to limit the scope of the invention. These novel embodiments can be implemented in various other forms, and various omissions, substitutions, and modifications can be made without departing from the spirit of the invention. The accompanying claims and their equivalents are intended to cover such embodiments and modifications as would fall within the scope and spirit of the invention.

## Claims

1. A battery pack comprising:
a case housing in which multiple battery cells are housed;
a monitoring substrate on which temperature sensors for measuring temperature of the battery cells are provided; and
coupling materials provided in the case housing in a compressed state against the monitoring substrate to thermally connect the battery cells and the temperature sensors.

2. The battery pack according to claim 1, wherein the coupling materials are compressed in a direction reducing distance between the temperature sensors and the battery cells.

3. The battery pack according to claim 1 or 2, wherein the coupling materials are fixed between the battery cells and a lid body of the case housing in a state where the monitoring substrate is interposed and a state where the coupling materials are compressed by the lid body.

4. The battery pack according to claim 1 or 2, wherein the coupling materials are fixed between the battery cells and the monitoring substrate in a state where the temperature sensors are interposed and a state where the coupling materials are compressed by the monitoring substrate.

5. The battery pack according to any one of claims 1 to 4, wherein the coupling materials are each a flexible resin material.

6. The battery pack according to any one of claims 1 to 5, wherein
the battery cells each include a release valve being means for releasing electrolyte from an inside of each battery cell, and
the coupling materials are each disposed to avoid a position of the release valve.

7. The battery pack according to any one of claims 1, 2, or 4 to 6, wherein
the monitoring substrate includes through-holes, and
the coupling materials are formed of ultraviolet-curable resin, and are each provided with a protrusion portion configured to suppress movement with respect to the through-hole by being cured in a state of passing through the through-hole.

8. The battery pack according to any one of claims 1, 2, or 4 to 6, wherein
the monitoring substrate includes through-holes, and
the coupling materials each include a fixture configured to suppress movement with respect to the through-hole by being fixed in a state of being inserted into the through-hole.

9. The battery pack according to any one of claims 1, 2, or 4 to 6, wherein the coupling materials each have a suction cup shape of clinging onto the monitoring substrate.

10. The battery pack according to claim 9, wherein the coupling materials each have a bellows shape extending from the monitoring substrate to the battery cell.

11. The battery pack according to claim 9 or 10, wherein the coupling materials are each formed of a flexible elastic material.
